# EUROPEAN PATENT SPECIFICATION

(11) **EP 4 545 272 B1**
(45) Date of publication and mention of the grant of the patent: **30.09.2026**
(21) Application number: 23860738.6
(22) Date of filing: 16.08.2023
(51) Int. Cl.: B29C 51/08, H01M 50/105, B29C 43/36, B29L 31/00, B21D 22/02, B21D 22/20, B21D 53/00

(54) **APPARATUS FOR MOLDING SECONDARY BATTERY POUCH AND SECONDARY BATTERY POUCH MANUFACTURED THEREBY**
VORRICHTUNG ZUR FORMUNG EINES SEKUNDÄRBATTERIEBEUTELS UND DAMIT HERGESTELLTER SEKUNDÄRBATTERIEBEUTEL
DISPOSITIF DE FORMATION DE POCHE DE BATTERIE SECONDAIRE ET POCHE DE BATTERIE SECONDAIRE FABRIQUÉE PAR CELUI-CI

(30) Priority: 31.08.2022 KR 20220110313
(43) Date of publication of application: 30.04.2025
(73) Proprietor: LG Energy Solution, Ltd., Seoul 07335 (KR)
(72) Inventor: KIM, Shin Chul, Daejeon 34122 (KR); LEE, Seung Yop, Daejeon 34122 (KR); LEE, Chung Hee, Daejeon 34122 (KR); LEE, Sun Il, Daejeon 34122 (KR)
(74) Representative: Plasseraud IP
(86) International application number: PCT/KR2023/012124
(87) International publication number: WO 2024/049060

(56) References cited:
- JP-A- 2002 263 762
- JP-A- 2003 208 876
- KR-A- 20200 098 172
- KR-A- 20210 076 770
- KR-A- 20210 098 756
- KR-A- 20220 022 845
- KR-B1- 101 191 635
- KR-B1- 101 657 361
- US-A1- 2019 393 452
- US-A1- 2021 098 753
- US-A1- 2022 209 335

## Description

The present application claims the benefit of the priority of Korean Patent Application No. 10-2022-0110313, filed on August 31, 2022.

### TECHNICAL FIELD

The present invention relates to an apparatus for molding a secondary battery pouch and a secondary battery pouch manufactured therethrough, and more particularly, to an apparatus for molding a secondary battery pouch, which allows a pouch bridge part to be unfolded well when the pouch is folded so as to prevent cell damage, improve cell positioning precision, and prevent wrinkles on a cell sealing part, thereby producing a secondary battery having excellent quality, and a secondary battery pouch manufactured therethrough.

### BACKGROUND ART

In recent years, the price of energy sources increases due to the depletion of fossil fuels, the interest in environmental pollution is amplified, and the demand for ecofriendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases.

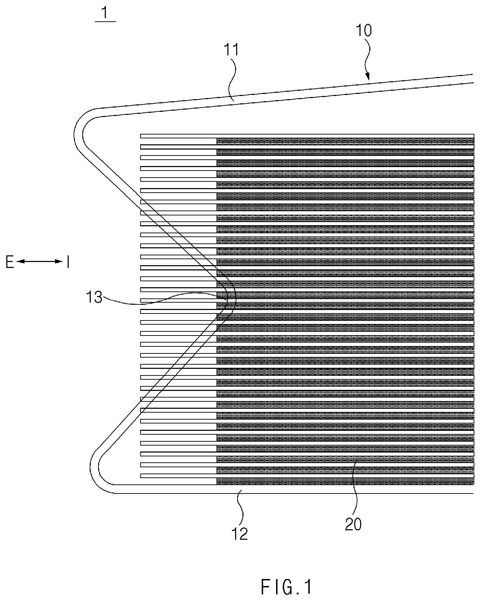

FIG. 1 is a cross-sectional view of a pouch-type secondary battery according to a related art. In detail, FIG. 1 is a cross-sectional view illustrating a pouch of a secondary battery and an electrode assembly, which is embedded in the pouch.

A pouch-type secondary battery 1 includes an electrode assembly 20, in which electrodes and separators are alternately stacked, and a pouch 10, into which the electrode assembly is inserted. In addition, the pouch includes cup parts 11 and 12 of the pouch, each of which has a recessed shape so that the electrode assembly is directly accommodated. The cup parts of the pouch may be provided with a left cup part 11 and a right cup part 12 to surround the electrode assembly at both sides thereof.

A portion connecting the left cup part 11 to the right cup part 12 may be a pouch bridge part 13. The left cup part 11 may be folded to an upper portion of the right cup part 12 with respect to the pouch bridge part 13. In this folding process, the cup parts 11 and 12 of the pouch may form an accommodation space, and the electrode assembly 20 may be accommodated in the accommodation space.

Referring to FIG. 1, in the related art, there is a problem in that the pouch bridge part 13 is not unfolded well when the left cup part 11 is folded to the upper portion of the right cup part 12. As a secondary battery becomes increasingly larger in capacity, a depth of pouch molding increases, and a resulting pouch thickness increases. As a result, when folding the pouch after molding, there is a problem in which the pouch bridge part 13 is not unfolded well as illustrated in FIG. 1. As described above, if the pouch bridge part 13 is not unfolded well and thus has a shape that protrudes toward the electrode assembly 20, the cell damage in which the pouch bridge part 13 damages the electrode assembly 20 may occur. In addition, if the pouch bridge part 13 is not unfolded well, an outer appearance of the cell may not be formed precisely, and thus, a position may not be accurately measured by a vision camera or the like. This could cause a decrease in location accuracy. In addition, if the pouch bridge part 13 is not unfolded well, a problem of wrinkles occurring when sealing the periphery of the pouch may occur due to the decrease in precision. Therefore, there is a high need to ensure that the pouch bridge part 13 is unfolded well when folding the pouch.

US 2022/0209335 A1, which forms the basis for the preambles of claims 1, 6, 13, and 15, discloses a battery case for secondary battery and pouch type secondary battery. KR 20210076770 A discloses the case for secondary battery and the pouch type secondary battery. US 2019/0393452 A1 discloses a pouch case and secondary battery using the same. KR 20200098172 A discloses a die unit manufacturing the same and forming apparatus for pouches. KR 20210098756 A discloses a case for secondary battery and the secondary battery. KR 20220022845 A discloses a pouch type battery case and the pouch type secondary battery. KR 20160049328 A discloses a method of manufacturing can for secondary battery and secondary battery using the same.

### DISCLOSURE OF THE INVENTION

### TECHNICAL PROBLEM

The present invention is invented to solve the above problem, and an object of the present invention is to provide an apparatus for molding a secondary battery pouch, which allows a pouch bridge part to be unfolded well when the pouch is folded so as to prevent cell damage, improve cell positioning precision, and prevent wrinkles on a cell sealing part, thereby producing a secondary battery having excellent quality, and a secondary battery pouch manufactured therethrough.

### TECHNICAL SOLUTION

An apparatus for molding a secondary battery pouch according to the present invention is laid out in appended claim 1.

A cross-section of the bridge part, which is cut by a virtual vertical plane that divides the left and right accommodation grooves while passing through the bridge part may have a shape similar to a portion or entire of a U-shape.

A cross-section of the bridge part, which is cut by a virtual vertical plane that divides the left and right accommodation grooves while passing through the bridge part may have a shape similar to a portion or entire of a circular or oval shape.

The central portion of the bridge part may have a height of 9 mm to 10 mm, and each of both the ends of the bridge part has a height of 11 mm to 12 mm.

The punch may include a punch protrusion having a shape protruding to correspond to the recessed shape of the bridge part.

An apparatus for molding a secondary battery pouch according to the present invention is laid out in appended claim 6.

In both the ends areas, the bottom surface of each of the left accommodation groove and the right accommodation groove may be inclined so that a height thereof increases as approaching the bridge part.

Each of the left accommodation groove and the right accommodation groove may include a bottom surface and a sidewall surface extending upward from a circumference of the bottom surface, and the sidewall surface of the left accommodation groove, which is measured based on the bottom surface of the left accommodation groove, may have the same height at the central area and both the end areas.

The sidewall surface of the right accommodation groove, which is measured based on the bottom surface of the right accommodation groove, may have the same height at the central area and both the end areas
The left accommodation groove and the right accommodation groove may be defined in shapes that are symmetrical to each other with respect to the bridge part.

Each of the left accommodation groove and the right accommodation groove has a horizontal bottom surface on a central area and an inclined bottom surface on each of both end areas, based on a direction parallel to a longitudinal direction of the bridge part.

A secondary battery pouch according to the present invention is laid out in appended claim 13.

The central portion of the pouch bridge part may have a height of 2 mm to 4 mm, and each of both the ends of the pouch bridge part has a height of 4 mm to 6 mm.

A secondary battery pouch according to the present invention is laid out in appended claim 15.

Each of the left cup part and the right cup part has a horizontal bottom surface on a central area and an inclined bottom surface on each of both end areas, based on a direction parallel to a longitudinal direction of the bridge part.

### ADVANTAGEOUS EFFECTS

In the apparatus for molding the secondary battery pouch and the secondary battery pouch manufactured therethrough, when the pouch is folded, the pouch bridge part may be unfolded well to prevent the cell damage, improve the cell positioning precision, and prevent the wrinkles on the cell sealing part, thereby producing the secondary battery having the excellent quality.

### BRIEF DESCRIPTION OF THE DRAWINGS

FIG. 1 is a cross-sectional view of a pouch-type secondary battery according to a related art.
FIG. 2 is a perspective view illustrating a die of an apparatus for molding a secondary battery pouch according to Embodiment 1 of the present invention.
FIG. 3 is a cross-sectional view of a bridge part, taken along line C-C' of FIG. 2.
FIG. 4(a) is a perspective view illustrating a punch of the apparatus for manufacturing the secondary battery pouch according to Embodiment 1 of the present invention.
FIG. 4(b) is a cross-sectional view illustrating the punch illustrated in FIG. 4(a).
FIG. 5 is a perspective view illustrating a secondary battery pouch manufactured by the apparatus for molding the secondary battery pouch according to Embodiment 1 of the present invention.
FIG. 6 is a perspective view illustrating a die of an apparatus for molding a secondary battery pouch according to Embodiment 2 of the present invention.
FIG. 7 is a cross-sectional view taken at a position S1 of FIG. 6.
FIG. 8 is a cross-sectional view taken at positions S2 and S3 of FIG. 6.
FIG. 9 is a perspective view illustrating the secondary battery pouch manufactured by the apparatus for molding the secondary battery pouch according to Embodiment 2 of the present invention.
FIG. 10 is a cross-sectional view taken at a position P1 of FIG. 9.
FIG. 11 is a cross-sectional view taken at positions P2 and P3 of FIG. 9.
FIG. 12 is a perspective view illustrating a die of an apparatus for molding a secondary battery pouch according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

### Embodiment 1

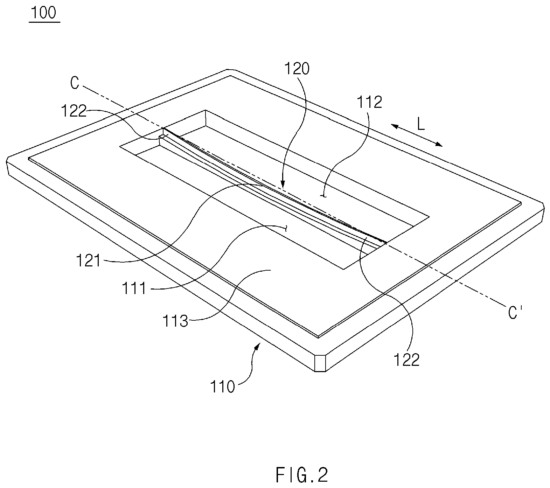

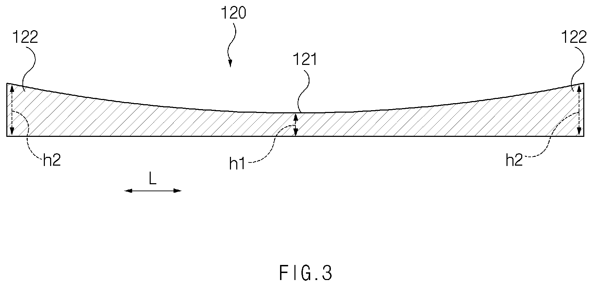

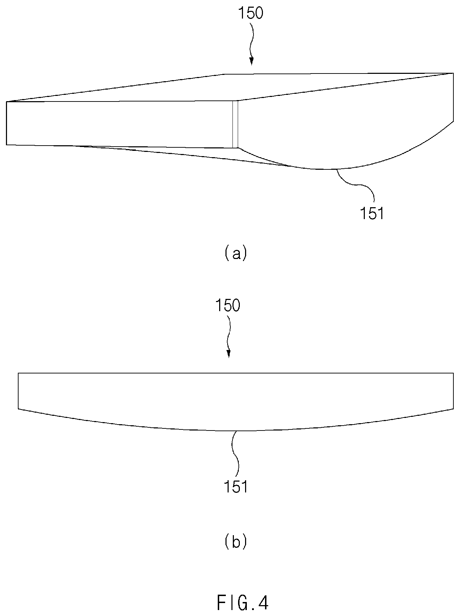

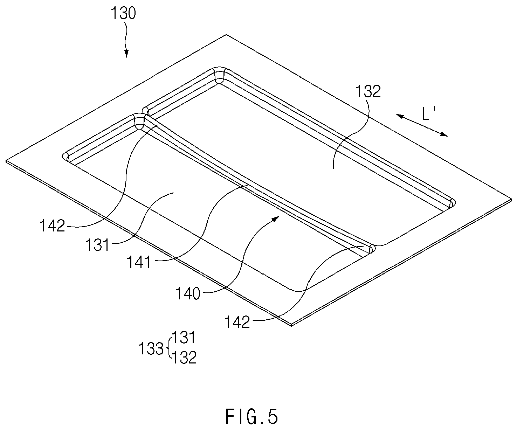

FIG. 2 is a perspective view illustrating a die of an apparatus for molding a secondary battery pouch according to Embodiment 1 of the present invention. FIG. 3 is a cross-sectional view of a bridge part, taken along line C-C' of FIG. 2. FIG. 4(a) is a perspective view illustrating a punch of the apparatus for manufacturing the secondary battery pouch according to Embodiment 1 of the present invention. FIG. 4 (b) is a cross-sectional view illustrating the punch illustrated in FIG. 4(a). FIG. 5 is a perspective view illustrating a secondary battery pouch manufactured by the apparatus for molding the secondary battery pouch according to Embodiment 1 of the present invention.

Referring to FIGS. 2 to 5, an apparatus 100 for molding a secondary battery pouch according to Embodiment 1 of the present invention may include a die 110 and a punch 150.

The die 110 may be configured to have an accommodation groove for molding a cup part 133 of the pouch on a base surface 113 on which the pouch is placed.

Specifically, the die 110 includes a left accommodation groove 111 having a recessed shape, a right accommodation groove 112 formed in a side portion of the left accommodation groove 111 and having an recessed shape, and a bridge part 120 connecting the left accommodation groove 111 to the right accommodation grooves 112 between the left accommodation groove 111 and the right accommodation groove 112.

The punch 150 may be configured to mold the cup part of the pouch while being inserted into the accommodation groove of the die 110. A pouch base material having a flat shape may be placed on the base surface 113, and then, the punch 150 may descend to mold the pouch. The punch 150 may mold the pouch with a shape corresponding to a shape of the die 110. The pouch may be molded while the punch 150 is inserted into the groove having the recessed shape of the die 110. The pouch molded in this manner may have the same shape as the secondary battery pouch 130, which is illustrated in FIG. 5.

In the apparatus 100 for molding the secondary battery pouch according to Embodiment 1 of the present invention, the bridge part 120 may have a recessed shape so that a height of a central portion 121 of the bridge part 120 is less than that of each of both ends 122 in a longitudinal direction L. Referring to FIGS. 2 and 3, a height of the bridge part 120 may continuously decrease from both the ends 122 to the central portion 121.

Referring to FIG. 3, in the bridge part 120, a cross-section cut by a virtual vertical plane that divides the left and right accommodation grooves while passing through the bridge part 120 may have a shape similar to a portion or entire of a U-shape. When cut in the virtual vertical plane, the cross-sectional shape of the bridge part 120 as illustrated in FIG. 3 may appear. As illustrated in FIG. 3, the cross-section of the bridge part 120, which is taken along the line C-C', may a curved shape, and in particular, the cross-section may be provided as a portion or entire of the U-shape.

In addition, in the bridge part 120, a cross-section cut by a virtual vertical plane that divides the left and right accommodation grooves while passing through the bridge part 120 may have a shape similar to a portion or entire of a circular or oval shape.

Referring to FIG. 3, a height h1 of the central portion 121 of the bridge part 120 may be 9 mm to 10 mm, and a height h2 of each of both the ends 122 of the bridge part 120 may be 11 mm to 12 mm. Thus, the bridge part 120 may have a shape in which each of both the ends 122 is higher, and the height decreases toward the central portion 121.

Referring to FIG. 4(a), the punch 150 may include a punch protrusion 151 having a shape protruding to correspond to the recessed shape of the bridge part 120. The punch protrusion 151 may be a portion disposed at a position corresponding to the bridge part 120 of the die 110. The pouch base material may be disposed between the punch protrusion 151 and the bridge part 120 of the die 110 and then be pressed. Thus, the pouch bridge part 140 may be molded in a shape corresponding to the shape of the bridge part 120 of the die 110. If the portion of the punch 150 corresponding to the bridge part 120 has a flat shape rather than the protruding shape, a space of the central portion 121 may be insufficient compared to both the ends 122 of the bridge part 120. Thus, when the punch 150 is provided in the protruding shape such as the U shape, a height difference may be compensated.

FIG. 4(b) illustrates a cross-section of the punch protrusion 151 illustrated in FIG. 4(a). The cross-section of the punch protrusion 151 may have a shape corresponding to the cross-section of the bridge part 120 of the die 110. That is, the cross-sectional shape of the punch protrusion 151 may be formed in the same shape as a portion or entire of the U-shape and may be formed in the same shape as a portion or entire of the circular or oval shape.

When the pouch is molded using the apparatus 100 for molding the secondary battery pouch described above, the secondary battery pouch 130 illustrated in FIG. 5 may be manufactured.

Referring to FIG. 5, the secondary battery pouch 130 manufactured by the apparatus 100 for manufacturing the secondary battery pouch according to Embodiment 1 of the present invention may include a pouch cup part 133 and a pouch bridge part 140.

Here, the pouch cup part 133 may include two cup parts such as a left cup part 131 and a right cup part 132. The pouch cup part 133 may be configured to be provided with two cup parts such as a left cup part 131 and a right cup part 132. The pouch bridge part 140 may be configured to connect the two cup parts to each other between the left cup part 131 and the right cup part 132.

A portion molded by a left accommodation groove 111 of the die 110 may be the left cup part 131, and a portion molded by the right accommodation groove 112 may be the right cup part 132. In addition, the portion formed by the bridge part 120 of the die 110 may be the pouch bridge part 140.

Thus, in the secondary battery pouch 130 manufactured by the apparatus 100 for molding the secondary battery pouch according to Embodiment 1 of the present invention, the pouch bridge part 140 may be formed in a recessed shape so that a height of the central portion 141 is less than a height of each of both the ends 142 in a longitudinal direction L'.

Specifically, the height of the central portion 141 of the pouch bridge part may be 2 mm to 4 mm, and the height of each of both the ends 142 of the pouch bridge part may be 4 mm to 6 mm. Thus, the pouch bridge part may have a shape in which each of both the ends 142 is higher, and the height decreases toward the central portion 141.

In the pouch bridge part 140, when the central portion 141 is formed in the recessed shape so that the height is less than the height of each of both the ends 142, the pouch bridge part 140 may be easily unfolded when the pouch is folded.

Referring to FIG. 1, according to the related art, the pouch bridge part 140 is not unfolded well. That is, as illustrated in FIG. 1, the pouch bridge part 140 has a shape that protrudes in an inner direction I of the secondary battery, as if a V shape is turned at an angle of 90 degrees in a counterclockwise direction. In this case, as illustrated in FIG. 1, an interference between the internal electrode assembly and the pouch bridge part 140 may occur, and thus, damage of the electrode assembly may occur. In particular, there is a problem in that the central portion 141 of the pouch bridge part 140 is not unfolded well. Each of both the ends 142 of the pouch bridge part 140 may be formed with an outer corner, and thus, both the ends 142 may be unfolded well due to stronger tension applied during the folding. On the other hand, the central portion 141 may not be unfolded well due to weak tension.

However, in the secondary battery pouch 130 manufactured by the apparatus 100 for molding the secondary battery pouch according to the present invention, a width of the pouch bridge part 140 is formed to be relatively shorter at the central portion 141 of the pouch bridge part 140. That is, each of both the ends 142 of the pouch bridge part 140 formed by a high-height portion of the bridge part 120 of the die 110 may be formed to have a long width and length, and the central portion 141 of the pouch bridge part 140 molded by a low-height portion of the bridge part 120 of the die 110 may be formed to have a shorter width. Thus, the central portion 141 of the pouch bridge part 140 may be unfolded better even if a small amount of tension is applied during the folding.

Therefore, the pouch bridge part 140 of the secondary battery pouch 130 manufactured by the secondary battery pouch forming apparatus 100 according to Embodiment 1 of the present invention may be unfolded significantly better when the pouch is folded. In this case, the pouch bridge part 140 may move further in an outward direction E than that illustrated in FIG. 1 and then be unfolded straightly. In that case, an interference with the electrode assembly may not occur, and thus, the electrode assembly may be prevented from being damaged.

In addition to the preventing of the damage of the electrode assembly and thus the preventing of the damage of the cell, the apparatus for molding the secondary battery pouch according to Embodiment 1 of the present invention may achieve effects of improving cell positioning precision and preventing wrinkles on a cell sealing area.

When the pouch bridge part 140 is unfolded well, the outer appearance of the cell may be precisely formed, and thus, a position may be precisely measured by a vision camera, etc. This may lead to improved positioning accuracy. In addition, if the pouch bridge part 140 is unfolded well, the problem of the wrinkles occurring when sealing the periphery of the pouch may be prevented due to the improved precision.

Thus, the apparatus for molding the secondary battery pouch and the secondary battery according to Embodiment 1 of the present invention may implement a secondary battery having excellent quality.

### Embodiment 2

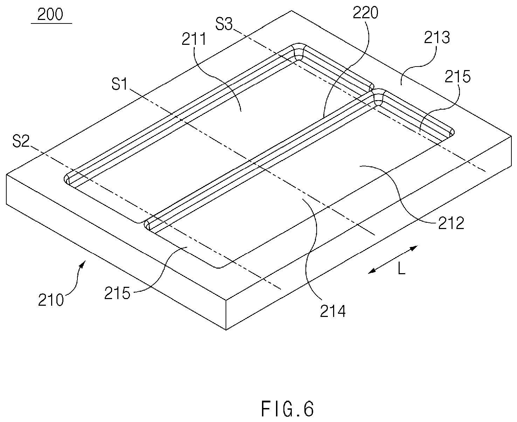

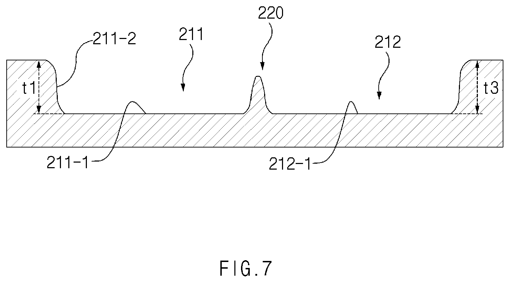

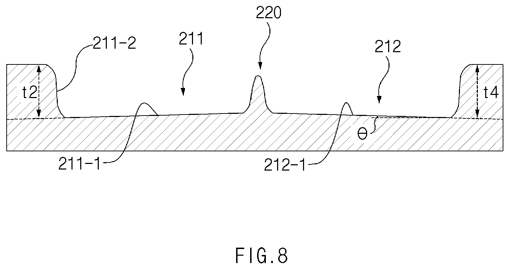

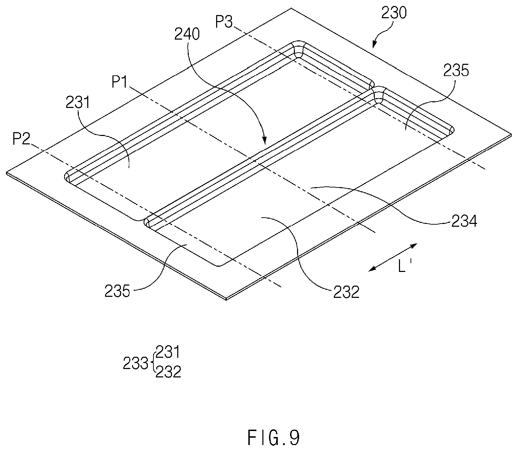

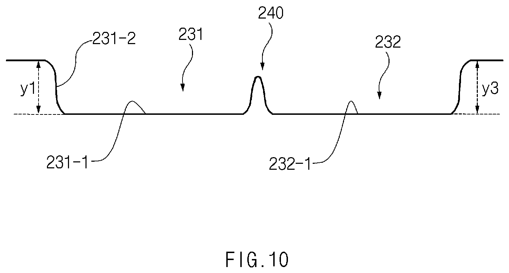

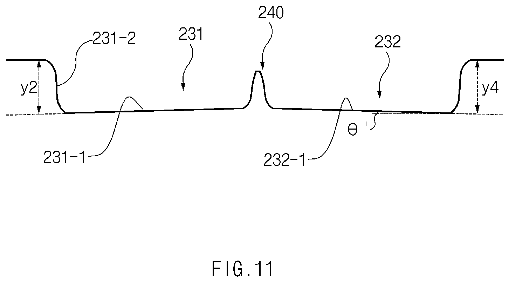

FIG. 6 is a perspective view illustrating a die of an apparatus for molding a secondary battery pouch according to Embodiment 2 of the present invention. FIG. 7 is a cross-sectional view taken at a position S1 of FIG. 6. FIG. 8 is a cross-sectional view taken at positions S2 and S3 of FIG. 6. FIG. 9 is a perspective view illustrating the secondary battery pouch manufactured by the apparatus for molding the secondary battery pouch according to Embodiment 2 of the present invention. FIG. 10 is a cross-sectional view taken at a position P1 of FIG. 9. FIG. 11 is a cross-sectional view taken at positions P2 and P3 of FIG. 9.

Embodiment 2 of the present invention is different from Embodiment 1 in that it is characterized in that a portion of a bottom surface of each of left and right receiving grooves of a die has an inclined shape.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

An apparatus 200 for molding a secondary battery pouch according to Embodiment 2 of the present invention may include a die 210 and a punch.

The die 210 may be configured to have an accommodation groove for molding a cup part of the pouch on a base surface 213 on which the pouch is placed.

Specifically, the die 210 includes a left accommodation groove 211 having a recessed shape, a right accommodation groove 212 formed in a side portion of the left accommodation groove 211 and having an recessed shape, and a bridge part 220 connecting the left accommodation groove 211 to the right accommodation grooves 212 between the left accommodation groove 211 and the right accommodation groove 212.

The punch 150 may be configured to mold the cup part of the pouch while being inserted into the accommodation groove of the die 210. The punch may have a shape corresponding to the groove of the die 210, and the pouch may be molded by being inserted into the recessed groove of the die 210. The pouch molded in this manner may have the same shape as the secondary battery pouch 230 illustrated in FIGS. 9 to 11.

Referring to FIG. 6, in the apparatus 200 for molding the secondary battery pouch according to Embodiment 2 of the present invention, bottom surfaces of the left accommodation groove 211 and the right accommodation groove 212 may be formed horizontally on a central area 214 and may be formed to be inclined on both end areas 215, based on a direction parallel to a longitudinal direction L of the bridge part 220.

FIG. 7 is a cross-sectional view taken at a position S1 of FIG. 6. A cross-sectional view cut at a position S1 may mean a cross-sectional view on the central area 214. As illustrated in the cross-sectional view of FIG. 7, a bottom surface of the accommodation groove on the central area 214 is not inclined, that is, is formed horizontally.

FIG. 8 is a cross-sectional view taken at positions S2 and S3 of FIG. 6. The cross-sectional view cut at positions S2 and S3 may mean a cross-sectional view on both the end areas 215. As illustrated in the cross-sectional view of FIG. 8, the bottom surfaces of the accommodation groove at each of both the end areas 215 may be inclined. In the apparatus 200 for molding the secondary battery pouch according to Embodiment 2 of the present invention, cross-sections of the accommodation grooves at positions S2 and S3 may be the same, and the cross-sectional view may be the cross-sectional view illustrated in FIG. 8.

Referring to FIG. 8, in both the end areas 215, a bottom surface 211-1 of the left accommodation groove and a bottom surface 212-1 of the right accommodation groove may be formed to be inclined to increase in height as approaching the bridge part 220. Specifically, in both the end areas 215, an inclination angle θ formed by the bottom surface 211-1 of the left accommodation groove and the bottom surface 212-1 of the right accommodation groove with respect to a horizontal plane is 1 degree to 10 degrees.

In the apparatus 200 for molding the secondary battery pouch according to Embodiment 2 of the present invention, each of the left accommodation groove 211 and the right accommodation groove 212 may include a bottom surface and a sidewall surface 211-2 extending upward from a circumference of the bottom surface. It is possible to implement a shape in which the bottom and sidewall surfaces are recessed together.

In addition, the sidewall surface 211-2 of the left accommodation groove 211 measured based on the bottom surface 211-1 of the left accommodation groove may have the same height at the central area 214 and both the end areas 215. This is explained in detail as follows.

First, referring to FIG. 7, a height of the sidewall surface 211-2 of the left accommodation groove 211 measured based on the bottom surface 211-1 of the left accommodation groove on the central area 214 may be t1. In addition, referring to FIG. 8, a height of the sidewall surface 211-2 of the left accommodation groove 211 measured based on the bottom surface 211-1 of the left accommodation groove on each of both the end areas 215 may be t2. Here, t1 and t2 may have the same value (t1=t2).

In addition, in the apparatus 200 for molding the secondary battery pouch according to Embodiment 2 of the present invention, the sidewall surface 211-2 of the right accommodation groove 212 measured based on the bottom surface 212-1 of the right accommodation groove may have the same height at the central area and both the end areas 215. This is explained in detail as follows.

First, referring to FIG. 7, a height of the sidewall of the right accommodation groove 212 measured based on the bottom surface 212-1 of the right accommodation groove on the central area 214 may be t3. In addition, referring to FIG. 8, a height of the sidewall of the right accommodation groove 212 measured based on the bottom surface 212-1 of the right accommodation groove on each of both the end areas 215 may be t4. Here, t3 and t4 may have the same value (t3=t4).

In addition, in the apparatus 200 for molding the secondary battery pouch according to Embodiment 2 of the present invention, the left accommodation groove 211 and the right accommodation groove 212 may be formed in shapes that are symmetrical to each other with respect to the bridge part 220. Specifically, that are symmetrical with respect to the bridge part 220 means that the left accommodation groove 211 and the right accommodation groove 212 have a symmetrical shape based on a virtual plane that cuts the bridge part 220 perpendicularly.

In this case, t1=t3 and t2=t4. In addition, according to the previous explanation, t1=t2 and t3=t4, and as a result, t1=t2=t3=t4. That is, all of t1, t2, t3, and t4 may have the same value.

When the pouch is molded using the apparatus 200 for molding the secondary battery pouch described above, the secondary battery pouch 230 illustrated in FIGS. 9 toll may be manufactured.

Referring to FIG. 9, the secondary battery pouch 230 manufactured by the apparatus 200 for manufacturing the secondary battery pouch according to Embodiment 2 of the present invention may include a pouch cup part 233 and a pouch bridge part 240.

Here, the pouch cup part 233 may include two cup parts such as a left cup part 231 and a right cup part 232. The pouch cup part 233 may be configured to be provided with two cup parts such as a left cup part 231 and a right cup part 232. The pouch bridge part 240 may be configured to connect the two cup parts to each other between the left cup part 231 and the right cup part 232.

A portion molded by a left accommodation groove 211 of the die 210 may be the left cup part 231, and a portion molded by the right accommodation groove 212 may be the right cup part 232. In addition, the portion formed by the bridge part 220 of the die 210 may be the pouch bridge part 240.

Referring to FIGS. 9 to 11, the left cup part 231 and the right cup part 232 may have horizontal bottom surfaces on the central area 234 based on the direction parallel to the longitudinal direction L' of the pouch bridge part 240 and inclined bottom surfaces both the end areas 235. This may be a result of the shape of the pouch cup part 233 being formed to correspond to the shape of the accommodation groove of the die 210.

FIG. 10 is a cross-sectional view taken at a position P1 of FIG. 9. A cross-sectional view cut at a position P1 may mean a cross-sectional view on the central area 234. As illustrated in the cross-sectional view of FIG. 10, a bottom surface of the accommodation groove on the central area 234 is not inclined, that is, is formed horizontally.

FIG. 11 is a cross-sectional view taken at positions P2 and P3 of FIG. 9. The cross-sectional view cut at the positions P2 and P3 may mean a cross-sectional view on both the end areas 235. As illustrated in the cross-sectional view of FIG. 11, the bottom surfaces of the accommodation groove at each of both the end areas 235 may be inclined. In the secondary battery pouch 230 manufactured by the apparatus 200 for molding the secondary battery pouch according to Embodiment 2 of the present invention, cross-sections of the accommodation grooves at positions P2 and P3 may be the same, and the cross-sectional view may be the cross-sectional view illustrated in FIG. 11.

Referring to FIG. 11, in both the end areas 235, a bottom surface 231-1 of the left cup part 231 and a bottom surface 232-1 of the right cup part 232 may be formed to be inclined to increase in height as approaching the pouch bridge part 240. Specifically, in both the end areas 235, an inclination angle θ formed by the bottom surface 231-1 of the left cup part 231 and the bottom surface 232-1 of the right cup part 232 with respect to a horizontal plane is 1 degree to 10 degrees.

In the secondary battery pouch 230 manufactured by the apparatus 200 for molding the secondary battery pouch according to Embodiment 2 of the present invention, each of the left cup part 231 and the right cup part 232 may include a bottom surface and a sidewall surface 231-2 extending upward from a circumference of the bottom surface. It is possible to implement a shape in which the bottom and sidewall surfaces are recessed together.

In addition, the sidewall surface 231-2 of the left cup part 231 measured based on the bottom surface 231-1 of the left cup part 231 may have the same height at the central area 234 and both the end areas 235. This is explained in detail as follows.

First, referring to FIG. 10, a height of the sidewall surface 231-2 of the left cup part 231 measured based on the bottom surface 231-1 of the left cup part 231 on the central area 234 may be y1. In addition, referring to FIG. 11, a height of the sidewall surface 231-2 of the left cup part 231 measured based on the bottom surface 231-1 of the left cup part 231 on each of both the end areas 235 may be y2. Here, y1 and y2 may have the same value (y1=y2).

In addition, in the secondary battery pouch 230 manufactured by the apparatus 200 for molding the secondary battery pouch according to Embodiment 2 of the present invention, the sidewall surface of the right cup part 232 measured based on the bottom surface 232-1 of the right cup part 232 may have the same height at the central area 234 and both the end areas 235. This is explained in detail as follows.

First, referring to FIG. 10, a height of the sidewall of the right cup part 232 measured based on the bottom surface 232-1 of the right cup part 232on the central area 234 may be y3. In addition, referring to FIG. 11, a height of the sidewall of the right cup part 232 measured based on the bottom surface 232-1 of the right cup part 232 on each of both the end areas 235 may be t4. Here, y3 and y4 may have the same value (y3=y4).

In addition, in the secondary battery pouch 230 manufactured by the apparatus 200 for molding the secondary battery pouch according to Embodiment 2 of the present invention, the left cup part 231 and the right cup part 232 may be formed in shapes that are symmetrical to each other with respect to the pouch bridge part 240. Specifically, that are symmetrical with respect to the pouch bridge part 240 means that the left cup part 231 and the right cup part 232 have a symmetrical shape based on a virtual plane that cuts the pouch bridge part 240 perpendicularly.

In this case, y1=y3 and y2=y4. In addition, according to what was explained earlier, y1=y2 and y3=y4, and as a result, y1=y2=y3=y4. That is, all of y1, y2, y3, and y4 may have the same value.

As manufactured by the secondary battery pouch molding apparatus 200 according to Embodiment 2 of the present invention, in the secondary battery pouch 230 of the present invention, each of the left cup part 231 and the right cup part 232 may have a horizontal bottom surfaces on the central area 234 and inclined bottom surfaces on both the end areas 235. Thus, when the pouch is folded, the pouch bridge part 240 may be unfolded significantly better.

Since the secondary battery pouch 230 of the present invention has the inclined bottom surface on each of both the end areas 235, when folding the pouch in half so that an edge of the left cup part 231 and an edge of the right cup part 232 meet each other, a portion of the bottom surface of each of both the end areas 235 moves more. As a result, an edge portion of each of both the end areas 235 may pull the central area 234 of the pouch more. As a result, the pouch bridge part 240 may be unfolded significantly better on the central area 234.

When the pouch bridge part 240 is unfolded significantly better, the pouch bridge part 240 may move further in an outward direction E than that illustrated in , FIG. 1 and then be unfolded straightly. In that case, an interference with the electrode assembly may not occur, and thus, the electrode assembly may be prevented from being damaged.

In addition to the preventing of the damage of the electrode assembly and thus the preventing of the damage of the cell, the apparatus 200 for molding the secondary battery pouch according to Embodiment 2 of the present invention may achieve effects of improving cell positioning precision and preventing wrinkles on a cell sealing area.

When the pouch bridge part 240 is unfolded well, the outer appearance of the cell may be precisely formed, and thus, a position may be precisely measured by a vision camera, etc. This may lead to improved positioning accuracy. In addition, if the pouch bridge part 240 is unfolded well, the problem of the wrinkles occurring when sealing the periphery of the pouch may be prevented due to the improved precision.

Thus, the apparatus 200 for molding the secondary battery pouch and the secondary battery according to Embodiment 2 of the present invention may implement a secondary battery having excellent quality.

### Embodiment 3

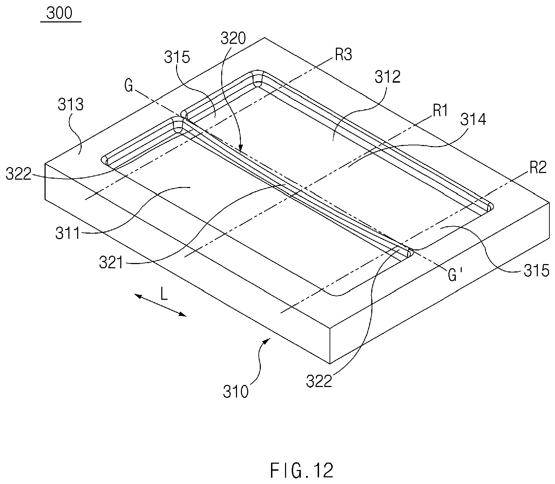

FIG. 12 is a perspective view illustrating a die of an apparatus for molding a secondary battery pouch according to Embodiment 3 of the present invention.

Embodiment 3 of the present invention is different from Embodiments 1 and 2 in that the apparatus for molding the secondary battery pouch has the features of Embodiment 1 and Embodiment 2 described above, and the secondary battery pouch is manufactured therethrough.

The contents that are duplicated with Embodiments 1 and 2 will be omitted as much as possible, and Embodiment 2 will be described with a focus on the differences. That is, it is obvious that the contents that are not described in Embodiment 3 may be regarded as the contents of Embodiments 1 and 2 if necessary.

An apparatus 300 for molding a secondary battery pouch according to Embodiment 3 of the present invention may include a die 310 and a punch.

The die 310 may be configured to have an accommodation groove for molding a cup part of the pouch on a base surface 313 on which the pouch is placed.

Specifically, the die 310 includes a left accommodation groove 311 having a recessed shape, a right accommodation groove 312 formed in a side portion of the left accommodation groove 311 and having an recessed shape, and a bridge part 320 connecting the left accommodation groove 311 to the right accommodation grooves 312 between the left accommodation groove 311 and the right accommodation groove 312.

The punch 150 may be configured to mold the cup part of the pouch while being inserted into the accommodation groove of the die 310. The punch may have a shape corresponding to the groove of the die 310, and the pouch may be molded by being inserted into the recessed groove of the die 310.

Referring to FIG. 12, in the apparatus 300 for molding the secondary battery pouch according to Embodiment 3 of the present invention, the bridge part 320 may have a recessed shape so that a height of a central portion 321 of the bridge part 320 is less than that of each of both ends 322 in a longitudinal direction L. Here, a height of the bridge part 320 may continuously decrease from both the ends 322 to the central portion 321.

A cross-section of the bridge part 320, which is taken along line G-G' illustrated in FIG. 12, may have the same shape as illustrated in FIG. 3. Therefore, the content described based on FIG. 3 in the description of foregoing Embodiment 1 may be equally applied to the apparatus 300 for molding the secondary battery pouch according to Embodiment 3.

A cross-section of the bridge part 320 may be formed in the same shape as a portion or entire of a U-shaped or may be formed in the same shape as a portion or entire of a circular or oval shape. In addition, a height h1 of the central portion 321 of the bridge part 320 may be 9 mm to 10 mm, and a height h2 of each of both the ends 322 of the bridge part 320 may be 11 mm to 12 mm.

In addition, referring to FIG. 12, in the apparatus 300 for molding the secondary battery pouch according to Embodiment 3 of the present invention, bottom surfaces of the left accommodation groove 311 and the right accommodation groove 312 may be formed horizontally on a central area 314 and may be formed to be inclined on both end areas 315, based on a direction parallel to a longitudinal direction L of the bridge part 320.

A cross-section of the bottom surface of the accommodation groove cut by R1 illustrated in FIG. 12 may be the same as that illustrated in FIG. 7, and a cross-section of the bottom surface of the accommodation groove cut by R2 and R3 may be the same shape as illustrated in FIG. 8. Therefore, the content explained based on FIGS. 7 and 8 in the description of Embodiment 2 above can be equally applied to the secondary battery pouch forming device 300 according to Embodiment 3.

In both the end areas 315, the bottom surfaces of the left accommodation groove 311 and the right accommodation groove 312 may be formed to be inclined so that a height increases as approaching the bridge part 320, and an inclination angle θ formed by the bottom surfaces of the left accommodation groove 311 and the right accommodation groove 312 with respect to a horizontal plane is 1 degree to 10 degrees.

Each of the left accommodation groove 311 and the right accommodation groove may include a bottom surface and a sidewall surface extending upward from a circumference of the bottom surface, and the sidewall surface of the left accommodation groove 311 measured based on the bottom surface of the left accommodation groove 311 may have the same height at the central area 314 and both the end areas 315.

In addition, the sidewall surface of the right accommodation groove 312 measured based on the bottom surface of the right accommodation groove 312 may have the same height at the central area 314 and both the end areas 315. In addition, the left accommodation groove 311 and the right accommodation groove 312 may be formed in shapes that are symmetrical to each other with respect to the bridge part 320.

The secondary battery pouch manufactured by the apparatus 300 for molding the secondary battery pouch according to Embodiment 3 of the present invention may also have features of the secondary battery pouch manufactured in Embodiment 1 and Embodiment 2.

The secondary battery pouch (not shown) manufactured by the apparatus 300 for manufacturing the secondary battery pouch according to Embodiment 3 of the present invention may include a pouch cup part and a pouch bridge part.

In addition, the pouch bridge part may be formed in a recessed shape so that a height of a central portion is lower than a height of each of both ends based on a longitudinal direction, the bottom surfaces of the left cup part and the right cup part may be formed horizontally on the central area based on a direction parallel to the longitudinal direction of the pouch bridge part, and the bottom surface may be formed to be inclined at each of both the end areas.

In addition, since the secondary battery pouch manufactured by the apparatus 300 for molding the secondary battery pouch according to Embodiment 3 of the present invention has the features of the secondary battery pouch manufactured in Embodiment 1 and Embodiment 2, the features of the secondary battery pouch described in Embodiment 1 based on FIG. 5 and the features of the secondary battery pouch described in Embodiment 2 based on FIGS. 9 to 11 may also be directly applied to the apparatus 300 for molding the secondary battery pouch according to Embodiment 3.

Therefore, in the apparatus for molding the secondary battery pouch and the secondary battery pouch manufactured therethrough according to Embodiment 3, when the pouch is folded, the pouch bridge part may be unfolded well to prevent the cell damage, improve the cell positioning precision, and prevent the wrinkles on the cell sealing part, thereby producing the secondary battery having the excellent quality.

While the embodiments of the present invention have been described with reference to the specific embodiments, it will be apparent to those skilled in the art that various changes and modifications may be made without departing from the scope of the invention as defined in the following claims.

### [Description of the Symbols]

100, 200, 300: Apparatus for molding secondary battery pouch
110, 210, 310: Die
111, 211, 311: Left accommodation groove
211-1: Bottom surface of left accommodation groove
211-2: Sidewall surface
112, 212, 312: Right accommodation groove
212-1: Bottom surface of right accommodation groove
113, 213, 313: Base surface
214, 314: Central area
215, 315: Both end areas
120, 220, 320: Bridge part
121, 321: Central portion
122, 322: Both ends
130, 230: Secondary battery pouch
131, 231: Left cup part
231-1: Bottom surface of left cup part
231-2: Sidewall surface
232-1: Bottom surface of right cup part
132, 232: Right cup part
133, 233: Pouch cup part
234: Central area of pouch
235: Both end areas of pouch
140, 240: Pouch bridge part
141: Central portion
142: Both ends
150: Punch
151: Punch protrusion

## Claims

1. An apparatus for molding a secondary battery pouch (100, 300), the apparatus comprising:
a die (110, 310) in which an accommodation groove for molding a cup part (133) of a pouch on a base surface (113, 313), on which the pouch is placed, is defined; and
a punch (150) inserted into the accommodation groove of the die (110, 310) to mold the cup part (133) of the pouch (100, 300),
wherein the die (110, 310) comprises:
a left accommodation groove (111, 311) having a recessed shape;
a right accommodation groove (112, 312) defined in a side portion of the left accommodation groove (111, 311) and having a recessed shape; and
a bridge part (120, 320) configured to connect the left accommodation groove (111, 311) to the right accommodation groove (112, 312) between the left accommodation groove (111, 311) and the right accommodation groove (112, 312),
**characterised in that**,
the bridge part (120, 320) has a recessed shape so that a height of a central portion (121, 321) thereof is less than that of each of both ends (122, 322) in a longitudinal direction (L), wherein the bridge part (120, 320) has a height that continuously decreases from each of both the ends (122, 322) to the central portion (121, 321).

2. The apparatus of claim 1, wherein a cross-section of the bridge part (120, 320), which is cut by a virtual vertical plane that divides the left and right accommodation grooves while passing through the bridge part (120, 320) has a shape similar to a portion or entire of a U-shape.

3. The apparatus of claim 1, wherein a cross-section of the bridge part (120, 320), which is cut by a virtual vertical plane that divides the left and right accommodation grooves while passing through the bridge part (120, 320) has a shape similar to a portion or entire of a circular or oval shape.

4. The apparatus of claim 1, wherein the central portion of the bridge part has a height (h1) of 9 mm to 10 mm, and each of both the ends (122, 322) of the bridge part (120, 320) has a height (h2) of 11 mm to 12 mm.

5. The apparatus of any one of claims 1 to 4, wherein the punch (150) comprises a punch protrusion (151) having a shape protruding to correspond to the recessed shape of the bridge part (120, 320).

6. An apparatus (200) for molding a secondary battery pouch, the apparatus comprising:
a die (210) in which an accommodation groove for molding a cup part of a pouch on a base surface, on which the pouch is placed, is defined; and
a punch (150) inserted into the accommodation groove of the die to mold the cup part of the pouch,
wherein the die comprises:
a left accommodation groove (211) having a recessed shape;
a right accommodation groove (212) defined in a side portion of the left accommodation groove (211) and having a recessed shape;
and
a bridge part (220) configured to connect the left accommodation groove (211) to the right accommodation groove (212) between the left accommodation groove and the right accommodation groove,
**characterised in that**,
each of the left accommodation groove and the right accommodation groove has a horizontal bottom surface on a central area (214) and an inclined bottom surface on each of both end areas (215), based on a direction parallel to a longitudinal direction of the bridge part (220).

7. The apparatus of claim 6, wherein, in both the ends areas (215), the bottom surface of each of the left accommodation groove (211) and the right accommodation groove (212) is inclined so that a height thereof increases as approaching the bridge part (220).

8. The apparatus of claim 6, wherein an inclination angle (θ) formed by the bottom surfaces of the left accommodation groove and the right accommodation groove with respect to a horizontal plane is 1 degree to 10 degrees.

9. The apparatus of claim 6, wherein each of the left accommodation groove (211) and the right accommodation groove (212) comprise a bottom surface (211-1, 212-1) and a sidewall surface (211-2, 212-2) extending upward from a circumference of the bottom surface (211-1, 212-1), and
the sidewall surface (211-2) of the left accommodation groove, which is measured based on the bottom surface (211-1) of the left accommodation groove (211), has the same height at the central area (214) and both the end areas (215) (t1 = t2).

10. The apparatus of claim 9, wherein the sidewall surface (212-2) of the right accommodation groove (212), which is measured based on the bottom surface (212-1) of the right accommodation groove (212), has the same height at the central area (214) and both the end areas (215) (t3 = t4).

11. The apparatus of any one of claims 6 to 10, wherein the left accommodation groove (211) and the right accommodation groove (212) are defined in shapes that are symmetrical to each other with respect to the bridge part (220).

12. The apparatus of claim 1, wherein each of the left accommodation groove and the right accommodation groove has a horizontal bottom surface on a central area and an inclined bottom surface on each of both end areas, based on a direction parallel to a longitudinal direction of the bridge part.

13. A secondary battery pouch comprising:
a pouch cup part (133, 233) comprising two cup parts such as a left cup part (131, 231) and a right cup part (132, 232); and
a pouch bridge part (140, 240) configured to connect the two cup parts to each other between the left cup part (131, 231) to the right cup part (132, 232),
wherein the pouch bridge part (140, 240) has a recessed shape so that a height of the central portion (141) is less than that of each of both the ends (142) in a longitudinal direction (L'),
**characterised in that**,
the pouch bridge part (140, 240) has a height that continuously decreases from each of both the ends (142) to the central portion (141).

14. The secondary battery pouch of claim 13, wherein the central portion (141) of the pouch bridge part (140, 240) has a height of 2 mm to 4 mm, and each of both the ends (142) of the pouch bridge part (140, 240) has a height of 4 mm to 6 mm.

15. A secondary battery pouch (230) comprising:
a pouch cup part comprising two cup parts such as a left cup part (231) and a right cup part (232); and
a pouch bridge part (240) configured to connect the two cup parts to each other between the left cup part to the right cup part,
**characterised in that**,
each of the left cup part and the right cup part has a horizontal bottom surface on a central area (234) and an inclined bottom surface on each of both end areas (235), based on a direction parallel to a longitudinal direction of the bridge part.

16. The secondary battery pouch of claim 13, wherein each of the left cup part and the right cup part has a horizontal bottom surface on a central area and an inclined bottom surface on each of both end areas, based on a direction parallel to a longitudinal direction of the bridge part.

## Patentansprüche

1. Vorrichtung zum Formen einer Sekundärbatterietasche (100, 300), wobei die Vorrichtung umfasst:
eine Matrize (110, 310), in der eine Aufnahmenut zum Formen eines Becherteils (133) einer Tasche auf einer Basisfläche (113, 313), auf der die Tasche platziert ist, definiert ist; und
einen Stempel (150), der in die Aufnahmenut der Matrize (110, 310) eingeführt wird, um den Becherteil (133) der Tasche (100, 300) zu formen,
wobei die Matrize (110, 310) umfasst:
eine linke Aufnahmenut (111, 311) mit einer vertieften Form;
eine rechte Aufnahmenut (112, 312), die in einem Seitenabschnitt der linken Aufnahmenut (111, 311) definiert ist und eine vertiefte Form aufweist; und
einen Brückenteil (120, 320), der so konfiguriert ist, dass er die linke Aufnahmenut (111, 311) mit der rechten Aufnahmenut (112, 312) zwischen der linken Aufnahmenut (111, 311) und der rechten Aufnahmenut (112, 312) verbindet,
**dadurch gekennzeichnet, dass**
der Brückenteil (120, 320) eine vertiefte Form aufweist, so dass eine Höhe eines zentralen Abschnitts (121, 321) davon geringer ist als die von jedem der beiden Enden (122, 322) in einer Längsrichtung (L), wobei der Brückenteil (120, 320) eine Höhe aufweist, die von jedem der beiden Enden (122, 322) zum zentralen Abschnitt (121, 321) kontinuierlich abnimmt.

2. Vorrichtung nach Anspruch 1, wobei ein Querschnitt des Brückenteils (120, 320), der durch eine virtuelle vertikale Ebene geschnitten wird, die die linke und die rechte Aufnahmenut teilt, während sie durch den Brückenteil (120, 320) verläuft, eine Form ähnlich einem Abschnitt oder einer Gesamtheit einer U-Form aufweist.

3. Vorrichtung nach Anspruch 1, wobei ein Querschnitt des Brückenteils (120, 320), der durch eine virtuelle vertikale Ebene geschnitten wird, die die linke und die rechte Aufnahmenut teilt, während sie durch den Brückenteil (120, 320) verläuft, eine Form ähnlich einem Abschnitt oder einer Gesamtheit einer kreisförmigen oder ovalen Form aufweist.

4. Vorrichtung nach Anspruch 1, wobei der zentrale Abschnitt des Brückenteils eine Höhe (h1) von 9 mm bis 10 mm aufweist und jedes der beiden Enden (122, 322) des Brückenteils (120, 320) eine Höhe (h2) von 11 mm bis 12 mm aufweist.

5. Vorrichtung nach einem der Ansprüche 1 bis 4, wobei der Stempel (150) einen Stempelvorsprung (151) mit einer Form umfasst, die so vorsteht, dass sie der vertieften Form des Brückenteils (120, 320) entspricht.

6. Vorrichtung (200) zum Formen einer Sekundärbatterietasche, wobei die Vorrichtung umfasst:
eine Matrize (210), in der eine Aufnahmenut zum Formen eines Becherteils einer Tasche auf einer Basisfläche, auf der die Tasche platziert ist, definiert ist; und
einen Stempel (150), der in die Aufnahmenut der Matrize eingeführt wird, um den Becherteil der Tasche zu formen,
wobei die Matrize umfasst:
eine linke Aufnahmenut (211) mit einer vertieften Form;
eine rechte Aufnahmenut (212), die in einem Seitenabschnitt der linken Aufnahmenut (211) definiert ist und eine vertiefte Form aufweist; und
einen Brückenteil (220), der so konfiguriert ist, dass er die linke Aufnahmenut (211) mit der rechten Aufnahmenut (212) zwischen der linken Aufnahmenut und der rechten Aufnahmenut verbindet,
**dadurch gekennzeichnet, dass**
jede der linken Aufnahmenut und der rechten Aufnahmenut eine horizontale Bodenfläche in einem zentralen Bereich (214) und eine geneigte Bodenfläche in jedem der beiden Endbereiche (215) aufweist, basierend auf einer Richtung parallel zu einer Längsrichtung des Brückenteils (220).

7. Vorrichtung nach Anspruch 6, wobei in beiden Endbereichen (215) die Bodenfläche jeder der linken Aufnahmenut (211) und der rechten Aufnahmenut (212) so geneigt ist, dass eine Höhe davon bei Annäherung an den Brückenteil (220) zunimmt.

8. Vorrichtung nach Anspruch 6, wobei ein Neigungswinkel (Θ), der durch die Bodenflächen der linken Aufnahmenut und der rechten Aufnahmenut in Bezug auf eine horizontale Ebene gebildet wird, 1 Grad bis 10 Grad beträgt.

9. Vorrichtung nach Anspruch 6, wobei jede der linken Aufnahmenut (211) und der rechten Aufnahmenut (212) eine Bodenfläche (211-1, 212-1) und eine Seitenwandfläche (211-2, 212-2) umfasst, die sich von einem Umfang der Bodenfläche (211-1, 212-1) nach oben erstreckt, und
die Seitenwandfläche (211-2) der linken Aufnahmenut, die basierend auf der Bodenfläche (211-1) der linken Aufnahmenut (211) gemessen wird, im zentralen Bereich (214) und in beiden Endbereichen (215) die gleiche Höhe aufweist (t1 = t2).

10. Vorrichtung nach Anspruch 9, wobei die Seitenwandfläche (212-2) der rechten Aufnahmenut (212), die basierend auf der Bodenfläche (212-1) der rechten Aufnahmenut (212) gemessen wird, im zentralen Bereich (214) und in beiden Endbereichen (215) die gleiche Höhe aufweist (t3 = t4).

11. Vorrichtung nach einem der Ansprüche 6 bis 10, wobei die linke Aufnahmenut (211) und die rechte Aufnahmenut (212) in Formen definiert sind, die in Bezug auf den Brückenteil (220) symmetrisch zueinander sind.

12. Vorrichtung nach Anspruch 1, wobei jede der linken Aufnahmenut und der rechten Aufnahmenut eine horizontale Bodenfläche in einem zentralen Bereich und eine geneigte Bodenfläche in jedem der beiden Endbereiche aufweist, basierend auf einer Richtung parallel zu einer Längsrichtung des Brückenteils.

13. Sekundärbatterietasche, umfassend:
einen Taschenbecherteil (133, 233), der zwei Becherteile wie einen linken Becherteil (131, 231) und einen rechten Becherteil (132, 232) umfasst; und
einen Taschenbrückenteil (140, 240), der so konfiguriert ist, dass er die beiden Becherteile miteinander zwischen dem linken Becherteil (131, 231) und dem rechten Becherteil (132, 232) verbindet,
wobei der Taschenbrückenteil (140, 240) eine vertiefte Form aufweist, so dass eine Höhe des zentralen Abschnitts (141) geringer ist als die von jedem der beiden Enden (142) in einer Längsrichtung (L'),
**dadurch gekennzeichnet, dass** der Taschenbrückenteil (140, 240) eine Höhe aufweist, die von jedem der beiden Enden (142) zum zentralen Abschnitt (141) kontinuierlich abnimmt.

14. Sekundärbatterietasche nach Anspruch 13, wobei der zentrale Abschnitt (141) des Taschenbrückenteils (140, 240) eine Höhe von 2 mm bis 4 mm aufweist und jedes der beiden Enden (142) des Taschenbrückenteils (140, 240) eine Höhe von 4 mm bis 6 mm aufweist.

15. Sekundärbatterietasche (230), umfassend:
einen Taschenbecherteil, der zwei Becherteile umfasst, wie einen linken Becherteil (231) und einen rechten Becherteil (232); und
einen Taschenbrückenteil (240), der so konfiguriert ist, dass er die beiden Becherteile zwischen dem linken Becherteil und dem rechten Becherteil miteinander verbindet,
**dadurch gekennzeichnet, dass**
jeder des linken Becherteils und des rechten Becherteils eine horizontale Bodenfläche in einem zentralen Bereich (234) und eine geneigte Bodenfläche in jedem der beiden Endbereiche (235) aufweist, basierend auf einer Richtung parallel zu einer Längsrichtung des Brückenteils.

16. Sekundärbatterietasche nach Anspruch 13, wobei jeder des linken Becherteils und des rechten Becherteils eine horizontale Bodenfläche in einem zentralen Bereich und eine geneigte Bodenfläche in jedem der beiden Endbereiche aufweist, basierend auf einer Richtung parallel zu einer Längsrichtung des Brückenteils.

## Revendications

1. Appareil de moulage d'une poche de batterie secondaire (100, 300), l'appareil comprenant :
une matrice (110, 310) dans laquelle une rainure de logement pour le moulage d'une partie en forme de coupelle (133) d'une poche sur une surface de base (113, 313), sur laquelle la poche est placée, est définie ; et
un poinçon (150) inséré dans la rainure de logement de la matrice (110, 310) pour mouler la partie en forme de coupelle (133) de la poche (100, 300),
dans lequel la matrice (110, 310) comprend :
une rainure de logement gauche (111, 311) ayant une forme évidée ;
une rainure de logement droite (112, 312) définie dans une partie latérale de la rainure de logement gauche (111, 311) et ayant une forme évidée ; et
une partie de pont (120, 320) configurée pour connecter la rainure de logement gauche (111, 311) à la rainure de logement droite (112, 312) entre la rainure de logement gauche (111, 311) et la rainure de logement droite (112, 312),
**caractérisé en ce que**,
la partie de pont (120, 320) a une forme évidée de sorte qu'une hauteur d'une partie centrale (121, 321) de celle-ci est inférieure à celle de chacune des deux extrémités (122, 322) dans une direction longitudinale (L), dans lequel la partie de pont (120, 320) a une hauteur qui diminue continuellement depuis chacune des deux extrémités (122, 322) vers la partie centrale (121, 321).

2. Appareil selon la revendication 1, dans lequel une section transversale de la partie de pont (120, 320), qui est coupée par un plan vertical virtuel qui sépare les rainures de logement gauche et droite tout en passant par la partie de pont (120, 320), a une forme similaire à une partie ou à la totalité d'une forme en U.

3. Appareil selon la revendication 1, dans lequel une section transversale de la partie de pont (120, 320), qui est coupée par un plan vertical virtuel qui divise les rainures de logement gauche et droite tout en passant par la partie de pont (120, 320), a une forme similaire à une partie ou à la totalité d'une forme circulaire ou ovale.

4. Appareil selon la revendication 1, dans lequel la partie centrale de la partie de pont a une hauteur (h1) de 9 mm à 10 mm, et chacune des deux extrémités (122, 322) de la partie de pont (120, 320) a une hauteur (h2) de 11 mm à 12 mm.

5. Appareil selon l'une quelconque des revendications 1 à 4, dans lequel le poinçon (150) comprend une saillie de poinçon (151) ayant une forme en saillie qui correspond à la forme évidée de la partie de pont (120, 320).

6. Appareil (200) de moulage d'une poche de batterie secondaire, l'appareil comprenant :
une matrice (210)
dans laquelle une rainure de logement pour le moulage d'une partie en forme de coupelle d'une poche sur une surface de base, sur laquelle la poche est placée, est définie ; et
un poinçon (150) inséré dans la rainure de logement de la matrice pour mouler la partie en forme de coupelle de la poche,
dans lequel la matrice comprend :
une rainure de logement gauche (211) ayant une forme évidée ;
une rainure de logement droite (212) définie dans une partie latérale de la rainure de logement gauche (211) et ayant une forme évidée ;
et une partie de pont (220) configurée pour connecter la rainure de logement gauche (211) à la rainure de logement droite (212) entre la rainure de logement gauche et la rainure de logement droite,
**caractérisé en ce que**,
chacune de la rainure de logement gauche et de la rainure de logement droite a une surface de fond horizontale sur une zone centrale (214)
et une surface de fond inclinée sur chacune des deux zones d'extrémité (215),
sur la base d'une direction parallèle à une direction longitudinale de la partie de pont (220).

7. Appareil selon la revendication 6, dans lequel, dans chacune des deux zones d'extrémité (215), la surface de fond de chacune de la rainure de logement gauche (211) et de la rainure de logement droite (212) est inclinée de sorte qu'une hauteur de celle-ci augmente à l'approche de la partie de pont (220).

8. Appareil selon la revendication 6, dans lequel un angle d'inclinaison (θ) formé par les surfaces de fond de la rainure de logement gauche et de la rainure de logement droite par rapport à un plan horizontal est de 1 degré à 10 degrés.

9. Appareil selon la revendication 6, dans lequel chacune de la rainure de logement gauche (211) et de la rainure de logement droite (212) comprend une surface de fond (211-1, 212-1) et une surface de paroi latérale (211-2, 212-2) s'étendant vers le haut à partir d'une circonférence de la surface de fond (211-1, 212-1), et
la surface de paroi latérale (211-2) de la rainure de logement gauche, qui est mesurée sur la base de la surface de fond (211-1) de la rainure de logement gauche (211), a la même hauteur au niveau de la zone centrale (214) et des deux zones d'extrémité (215) (t1 = t2).

10. Appareil selon la revendication 9, dans lequel la surface de paroi latérale (212-2) de la rainure de logement droite (212), qui est mesurée sur la base de la surface de fond (212-1) de la rainure de logement droite (212), a la même hauteur au niveau de la zone centrale (214) et des deux zones d'extrémité (215) (t3 = t4).

11. Appareil selon l'une quelconque des revendications 6 à 10, dans lequel la rainure de logement gauche (211) et la rainure de logement droite (212) sont définies dans des formes qui sont symétriques l'une par rapport à l'autre, par rapport à la partie de pont (220).

12. Appareil selon la revendication 1, dans lequel chacune de la rainure de logement gauche et de la rainure de logement droite a une surface de fond horizontale sur une zone centrale et une surface de fond inclinée sur chacune des deux zones d'extrémité, sur la base d'une direction parallèle à une direction longitudinale de la partie de pont.

13. Poche de batterie secondaire comprenant :
une partie de poche en forme de coupelle (133, 233) comprenant deux parties en forme de coupelle telles qu'une partie en forme de coupelle gauche (131, 231) et une partie en forme de coupelle droite (132, 232) ; et
une partie de poche de pont (140, 240) configurée pour connecter les deux parties en forme de coupelle l'une à l'autre, entre la partie en forme de coupelle gauche (131, 231) et la partie en forme de coupelle droite (132, 232),
dans laquelle la partie de poche de pont (140, 240) a une forme évidée de sorte qu'une hauteur de la partie centrale (141) est inférieure à celle de chacune des deux extrémités (142) dans une direction longitudinale (L'),
**caractérisée en ce que**, la partie de poche de pont (140, 240) a une hauteur qui diminue continuellement depuis chacune des deux extrémités (142) vers la partie centrale (141).

14. Poche de batterie secondaire selon la revendication 13, dans laquelle la partie centrale (141) de la partie de poche de pont (140, 240) a une hauteur de 2 mm à 4 mm, et chacune des deux extrémités (142) de la partie de poche de pont (140, 240) a une hauteur de 4 mm à 6 mm.

15. Poche de batterie secondaire (230) comprenant :
une partie de poche en forme de coupelle comprenant deux parties en forme de coupelle telles qu'une partie en forme de coupelle gauche (231) et une partie en forme de coupelle droite (232) ; et
une partie de poche de pont (240) configurée pour connecter les deux parties en forme de coupelle l'une à l'autre entre la partie de coupelle gauche et la partie de coupelle droite,
**caractérisée en ce que**,
chacune de la partie en forme de coupelle gauche et de la partie en forme de coupelle droite a une surface de fond horizontale sur une zone centrale (234)
et une surface de fond inclinée sur chacune des deux zones d'extrémité (235),
sur la base d'une direction parallèle à une direction longitudinale de la partie de pont.

16. Poche de batterie secondaire selon la revendication 13, dans laquelle chacune de la partie en forme de coupelle gauche et de la partie en forme de coupelle droite a une surface de fond horizontale sur une zone centrale et une surface de fond inclinée sur chacune des deux zones d'extrémité, sur la base d'une direction parallèle à une direction longitudinale de la partie de pont.
